(19) Europäisches Patentamt
European Patent Office
Office européen des brevets

(11) EP 0 575 745 B1

(12) EUROPÄISCHE PATENTSCHRIFT

(45) Veröffentlichungstag und Bekanntmachung des Hinweises auf die Patenterteilung:
**26.03.1997 Patentblatt 1997/13**

(51) Int. Cl.[6]: **C04B 35/00**, C30B 29/30, C01G 33/00, C01G 35/00

(21) Anmeldenummer: **93108040.2**

(22) Anmeldetag: **17.05.1993**

(54) **Verfahren zur Herstellung von Blei-Metall-Niobaten**

Process for the preparation of lead-metal-niobates

Procédé de préparation de niobates de plomb et métal

(84) Benannte Vertragsstaaten:
**DE ES FR NL**

(30) Priorität: **29.05.1992 DE 4217818**

(43) Veröffentlichungstag der Anmeldung:
**29.12.1993 Patentblatt 1993/52**

(73) Patentinhaber: **H.C. Starck GmbH & Co. KG**
**D-38642 Goslar (DE)**

(72) Erfinder:
- **Reichert, Karlheinz, Dr.**
  **W-3343 Hornburg (DE)**
- **Tröger, Harald**
  **W-3380 Goslar (DE)**

(74) Vertreter: **Steiling, Lothar, Dr. et al**
**Bayer AG**
**Konzernzentrale RP**
**Patente Konzern**
**51368 Leverkusen (DE)**

(56) Entgegenhaltungen:
**EP-A- 0 294 991** **EP-A- 0 428 387**

- **ADVANCES IN CERAMICS, Ceramic Powder Science, Band 21, 1987, Westerville, OH (US); H.U. ANDERSON et al., Seiten 91-98**
- **MATERIALS RESEARCH BULLETIN, Band 25, Nr. 3, März 1990, New York, NY (US); J.- H. CHOY et al., Seiten 283-291**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 575 745 B1

## Beschreibung

Die vorliegende Erfindung betrifft ein Verfahren zur Herstellung von phasenreinen hochreaktiven Blei-Metall-Niobaten mit Perowskitstruktur der allgemeinen Formel $Pb_3Me(II)Nb_2O_9$ bzw. $Pb_2Me(III)NbO_6$, wobei Me = Mg, Fe, Co, Ni, Cr, Mn, Cd, Cu und/oder Zn bedeuten, wobei Perowskit-Vorprodukte aus entsprechenden Salzlösungen erhalten, abgetrennt, getrocknet und im Temperaturbereich von 500 bis 1000°C kalziniert werden.

Aufgrund der hohen Dielektrizitätskonstanten und des großen elektrostriktiven Koeffizienten spielen Ferroelektrika wie z.B. PbMg-Niobat, PbNi-Niobat oder PbZn-Niobat eine zunehmend wichtige Rolle, Solche Verbindungen mit Perowskit-Struktur entsprechen der allgemeinen Formel $Pb_3Me(II)Nb_2O_9$ bzw. $Pb_2Me(III)NbO_6$, wobei Me = Mg, Fe, Co, Ni, Cr, Mn, Cd, Cu, Zn bedeuten (Appl. Phys. Lett., 10 (5) 163-165 (1967)).

Für die Herstellung von komplexen ferroelektrischen Perowskiten mit einem Übergangsmetall der 5. Nebengruppe sind mehrere Verfahren bekannt:

Aus J. Am. Ceram. Soc. 71 (5), C-250-C-251 (1988) ist das Mischen der Oxide mit anschließender Feststoffreaktion bei sehr hohen Kalzinationstemperaturen bekannt. Es ist äußerst schwierig, über dieses keramische Verfahren phasenreine Perowskite mit mehr als 95 % Perowskit-Phase herzustellen Unvermeidbar tritt bei dieser Festkörperreaktion eine stabile Pyrochlor-Phase auf. Aus J. Am. Ceram. Soc. 67 (5) 311- 314 (1984) ist bekannt, $Nb_2O_5$ beispielsweise mit MgO in einer Feststoffreaktion vorreagieren zu lassen, wobei man bei der anschließenden Reaktion mit PbO gemäß den Formeln

$$\text{(I)}\quad Nb_2O_5 + MgO \xrightarrow{(1000^0\,C)} MgNb_2O_6 \text{ (Columbit)}$$

$$Mg_2NbO_6 + 3\ PbO \rightarrow Pb_3MgNb_2O_0 \text{ (Perowskit)} \qquad \text{(II)}$$

einen fast phasenreinen Perowskit erhält.

Aufgrund der hohen Temperaturen bei der Vorreaktion zum Columbit bei 1000°C erhält man jedoch aus den genannten Mischoxiden ein nur mäßig reaktives Mg-Niobat, so daß die anschließende Umsetzung mit PbO erst bei höheren Temperaturen zum Erfolg führt, Dieser Perowskit läßt sich in der Endfertigung auch erst bei Temperaturen von ca. 1200°C sintern.

Als vorteilhafter erwiesen sich für die Herstellung von komplexen Perowskiten naßchemische Verfahren. So wird in J. Am. Ceram. Soc. 72 (8), 1335-1357 (1989) die Hydrolyse eines Alkoxid-Gemisches, in EP-A 294 991 die Cofällung aus einer alkoholischen Oxalsäurelösung beschrieben. Aus Advances in Ceramics, Vo. 21, 91-98 (1987) ist die Kalzination eines Gels bekannt, das aus $NbCl_5$ bzw. $Nb(OR)_5$ und Metallsalzen durch Zusatz von $H_2O_2$ und Citronensäure hergestellt wurde. In der Regel erhält man über die Copräzipitation sehr reaktive Vorprodukte, die sich schon bei niedrigen Temperaturen zu den entsprechenden phasenreinen Perowskiten umsetzen. Die Sintereigenschaften dieser sehr feinen Pulver sind entsprechend gut. Bisher sind diese naßchemischen Verfahren allerdings sehr unwirtschaftlich. So weist die Alkoxidmethode den Nachteil auf, daß die Herstellung und die Handhabung der Ausgangsstoffe schwierig ist.

Bei der Oxalat-Methode besteht nicht die Möglichkeit, alle Komponenten gemeinsam zu fällen, weil aufgrund der stark unterschiedlichen Löslichkeiten der Metalloxalate in einem Alkohol/Wasser-Gemisch Probleme auftreten. Trotzdem erhält man auch hier bereits ein sehr feinkörniges Pulver mit guten Sintereigenschaften. Der schwerwiegendste Nachteil der Oxalat-Methode liegt in den sehr großen Alkoholmengen, die man benötigt, um alle Komponenten quantitativ zu fällen, Außerdem ist die geringe Löslichkeit von Nioboxalat hierbei von Nachteil. Die hier genannten Verfahren nach dem Stand der Technik weisen entweder die Nachteile auf, daß bei den keramischen Verfahren die Kalzinations- und Sintertemperaturen sehr hoch liegen oder daß die naßchemischen Verfahren sehr aufwendig und mit hohen Kosten verbunden sind. Dasselbe gilt auch für das beschriebene Citrat-Verfahren, Die bekannten Ausgangsstoffe für dieses Verfahren sind entsprechende Metallsalze und Niobchlorid bzw. Niobalkoxid. Erst durch Zugabe von Wasserstoffperoxid - zur Bildung eines wasserlöslichen Niobperoxokomplexes - und Citronensäure läßt sich aus allen Komponenten gemeinsam ein wäßriges Gel herstellen. Bei diesem Verfahren besteht allerdings nicht die Möglichkeit einer Copräzipitation, da die gebildeten Metall-Komplexe (Metall-Citrat- und Niob-Peroxocitrat-Komplex) außerordentlich stabil sind. Dementsprechend tritt selbst in Gegenwart von überschüssigem Ammoniak keine Zersetzung der Komplexe auf. Die wasserlöslichen Me-Citratkomplexe sind teilweise so stabil (wie z.B. für Me = Pb-, Mg-, Fe-, Ni-, Co-, Mn-, Nb-, Ta-, Zn-, Cd-Citrat), daß bei Zugabe von Ammoniak keine Fällung des entsprechenden Hydroxids eintritt. Die binären Mischungen der Metall-Citrate (Pb-Nb, Me-Nb) verhalten sich genauso wie die Einzelkomponenten.

Ein solches Verfahren wird in „Materials Research Bulletin", vol 25, no. 3, March 1990, Choy et al., beschrieben.

Es ist somit Aufgabe der vorliegenden Erfindung, ein Verfahren zur Herstellung von Perowskiten bereitzustellen, das die Nachteile des Standes der Technik nicht aufweist.

Es wurde nun gefunden, daß die Anforderungen erfüllt werden durch ein Verfahren zur Herstellung von phasenreinen hochreaktiven Blei-Metall-Niobaten mit Perowskitstruktur der allgemeinen Formel $Pb_3Me(II)Nb_2O_9$ bzw. $Pb_2Me(III)NbO_6$, wobei Me = Mg, Fe, Co, Ni, Cr, Mn, Cd, Cu und/oder Zn bedeuten, wobei Perowskit-Vorprodukte aus entsprechenden Salzlösungen erhalten, gegebenenfalls abgetrennt, getrocknet und im Temperaturbereich von 500 bis 1000°C kalziniert werden, wobei die Metallsalzlösungen in Form von Citraten eingesetzt und mit Ammoniak umgesetzt werden.

Dieses Verfahren ist Gegenstand dieser Erfindung. Zur Herstellung der Citrat-Lösungen ist es vorteilhaft, entsprechende Metallverbindungen, insbesondere Hydroxide, Carbonate und/oder Nitrate, mit Citronensäure einzusetzen. Um klare Lösungen zu erhalten, kann es vorteilhaft sein, Salpetersäure in geringen Mengen zuzusetzen.

Besonders gute Ergebnisse werden erreicht, wenn die Niob-Komponente als Niobhydroxid bzw. Niobsäure, gelöst in Citronensäure, in die Metallcitratlösung eingebracht wird.

Die erfindungsgemäß erhaltene Metallcitratlösung kann vorteilhaft auf zwei Wegen weiterverarbeitet werden. Wird die Menge von Ammoniak so bemessen, daß sich in der Lösung ein pH-Wert im Bereich von 2 bis 5 einstellt, wird ein Perowskitvorprodukt als Feststoff ausgefällt. Dieser kann dann in üblicher Weise abgetrennt, getrocknet und zum Endprodukt kalziniert werden. Es ist besonders überraschend, daß eine solche Fällung nur bei ternären oder höheren Mischungen auftritt. Selbst aus einer relativ verdünnten Lösung (1-molar) lassen sich bei pH $\leq$ 6 mehr als 90 % der Komponenten fällen, die sich durch Kalzination in der Perowskit überführen lassen.

Erhöht man den pH-Wert über 6 hinaus, löst sich der gesamte Niederschlag wieder auf.

Eine andere Ausführungsform des erfindungsgemäßen Verfahrens besteht darin, daß das Perowskitvorprodukt als Gel durch Aufkonzentrieren der Metallcitrat-Lösung bei einem pH-Wert von größer als 6 erhalten wird.

Dieses Gel kann entwässert und kalziniert werden. Besonders vorteilhaft wird hierzu das Gel unter Zugabe von organischen Lösungsmitteln kristallisiert, wobei sich als organische Lösungsmittel insbesondere Alkohole und/oder Ketone eignen.

Das erfindungsgemäße Verfahren ist aufgrund der billigeren Ausgangsstoffe und der wesentlich leichteren Handhabung eine wirtschaftlichere Methode als das Alkoxid-Verfahren. Über dieses Citrat-Verfahren erhält man hochreaktive Vorprodukte, die sich bei sehr niedrigen Temperaturen bereits zur Reaktion bringen lassen.

So erhält man bereits bei 300°C aus dem gefällten Vorprodukt die Pyrochlor-Phase. Dieser Pyrochlor wandelt sich bereits bei 500°C in Perowskit um. Bei einer Kalzinationszeit von 4 h bei 700°C liegt der Perowskitanteil bei über 85 %.

Die Kalzinationstemperaturen sind zunächst einmal abhängig vom zu kalzinierenden Perowskit. Sie liegen aber aufgrund der hohen Reaktivität der nach dem erfindungsgemäßen Verfahren erhaltenen Vorprodukte deutlich niedriger als beim keramischen Verfahren. Besonders vorteilhaft wird die Kalzination über einen Bereich von 30 min bis 4 h durchgeführt.

Da die meisten Metallcitrate in Wasser löslich sind (Zn, Co, Mg, Ni, Fe usw.) besteht bei diesem Verfahren auch die Möglichkeit, eine Vielkomponentenverbindung herzustellen. Besonders bevorzugt sind als Metalle (Me) Magnesium, Nickel, Eisen und/oder Zink.

Im folgenden wird die Erfindung beispielhaft beschrieben, ohne das hierin eine Einschränkunmg zu sehen ist.

Das in den folgenden Beispielen als Ausgangsstoff eingesetzte Niobcitrat wurde dabei wie folgt hergestellt:

4066 g filterfeuchtes Niobhydroxid (25,45 % Nb) wurden mit 4680 g Citronensäure vermischt. Durch Zugabe von geringen Mengen Ammoniaklösung entstand unter mehrstündigem Rühren bei 70°C eine klare Lösung. Der pH-Wert der Lösung betrug 0,1, die Dichte lag bei 1,42 g/cm$^3$.

<u>Beispiel 1</u>

50 ml einer Niob-Citratlösung (165 g $Nb_2O_5$/l) wurden mit 2,85 g Magnesiumhydroxidcarbonat vermischt, Nachdem sich die Magnesiumkomponente vollständig gelöst hatte, wurden 24,2 g Blei(II)-hydroxidcarbonat hinzugesetzt. Da sich die Bleiverbindung nicht vollständig löste, versetzte man die Suspension mit ca. 12 ml konz. Salpetersäure. Die danach klare Losung wurde mit $NH_4OH$ auf einen pH-Wert von 5 eingestellt. Bereits nach Zugabe von nur 1 ml $NH_4OH$ trat eine Fällung ein, Der weiße Niederschlag wurde filtriert, getrocknet und anschließend bei 850°C kalziniert. Die Ausbeute betrug über 90 %. Der gebildete Perowskit zeigte einen Pyrochloranteil von <5 %.

<u>Beispiel 2</u>

100 ml einer Niob-Citratlösung (154 g $Nb_2O_5$/l) wurden mit 47,5 g $Fe(NO_3)_3 \cdot 9H_2O$ und 76,7 g $Pb(NO_3)_2$ versetzt. Um eine klare Lösung zu erhalten, mußte noch mit ca. 150 ml $H_2O$ verdünnt werden Mit Ammoniak wurde die Lösung auf einen pH-Wert von 4,5 eingestellt, woraufhin die Fällung eintrat.

Das abfiltrierte und vorgetrocknete Produkt wurde bei 850°C eine Stunde lang kalziniert. Man erhielt dabei einen Perowskit mit einem Pyrochloranteil von <2 %.

Beispiel 3

100 ml einer Niob-Citratlösung (161 g $Nb_2O_5$/l) wurden mit 5,6 g Magnesiumhydroxidcarbonat versetzt. Nachdem sich die Magnesiumkomponente vollständig gelöst hatte, wurden 47,06 g Blei(II)-hydroxidcarbonat hinzugefügt. Da sich auch nach längerer Zeit die Bleiverbindung nicht vollständig gelöst hatte, wurde die Suspension mit konzentrierter Salpetersäure versetzt. Die klare Lösung wurde mit Ammoniak auf pH 7 eingestellt.

Die Lösung wurde solange in Hitze eingeengt, bis ein klares Gel erhalten wurde. Nachdem das Gel bei 110 bis 150°C getrocknet worden war, wurde bei 850°C 2 Stunden lang kalziniert. Man erhielt dabei einen Perowskit, der einen Pyrochloranteil von <2 % aufwies.

Beispiel 4

Alternativ kann das in Beispiel 3 hergestellte Gel wie folgt aufgearbeitet werden. Das entsprechend dem Beispiel 3 erhaltene Gel wurde mit Methanol versetzt und anschließend gerührt. Die Kristallisation trat sofort nach Zugabe des Alkohols ein. Nachdem das Gel vollständig kristallisiert war, wurde es filtriert, getrocknet und anschließend bei 850°C 4 Stunden lang kalziniert. Man erhielt auch hier einen Perowskit mit einem Pyrochloranteil von <2 %. Die Ausbeute betrug >99 %.

Beispiel 5

100 ml einer Niob-Citratlösung (154 g $Nb_2O_5$/l) wurden mit 47,5 g $Fe(NO_3)_3 \cdot 9H_2O$ und 76,7 g $Pb(NO_3)_2$ versetzt. Um eine klare Lösung zu erhalten, mußte noch mit ca. 150 ml Wasser verdünnt werden. Mit Ammoniak wurde die Lösung auf einen pH-Wert von ca. 7 eingestellt und anschließend solange eingeengt, bis ein klares Gel erhalten wurde. Nachdem das Gel bei 110 bis 150°C getrocknet worden war, wurde bei 850°C 1 Stunde lang kalziniert. Man erhielt dabei einen Perowskit mit einem Pyrochloranteil von <2 %.

Beispiel 6

Das aus Beispiel 5 erhaltene Gel wurde mit Methanol zur Kristallisation gebracht und nach vollständiger Kristallisation filtriert. Das Kristallisat wurde bei 110 bis 150°C getrocknet und anschließend bei 850°C 2 h kalziniert. Die Ausbeute betrug mehr als 99 %. Der dabei erhaltene Perowskit enthielt nur noch ca. 1,6 % Pyrochlor.

**Patentansprüche**

1. Verfahren zur Herstellung von phasenreinen hochreaktiven Blei-Metall-Niobaten mit Perowskitstruktur der allgemeinen Formel $Pb_3Me(II)Nb_2O_9$ bzw. $Pb_2Me(III)NbO_6$, wobei Me = Mg, Fe, Co, Ni, Cr, Mn, Cd, Cu und/oder Zn bedeuten: wobei Perowskit-Vorprodukte aus entsprechenden Salzlösungen erhalten, gegebenenfalls abgetrennt, getrocknet und im Temperaturbereich von 500 bis 1000°C kalziniert werden, dadurch gekennzeichnet, daß die Metallsalzlösungen in Form von Citraten eingesetzt und mit Ammoniak umgesetzt werden.

2. Verfahren gemäß Anspruch 1, dadurch gekennzeichnet, daß die Nb-Komponente als Niobhydroxid bzw. Niobsäure, gelöst in Citronensäure, in die Metallcitratlösung eingebracht wird.

3. Verfahren gemäß einem der Ansprüche 1 oder 2, dadurch gekennzeichnet, daß die Kalzination über einen Bereich von 30 min bis 4 h durchgeführt wird.

4. Verfahren gemäß einem oder mehreren der Ansprüche 1 bis 3, dadurch gekennzeichnet, daß Me = Mg, Ni, Fe und/oder Zn ist.

5. Verfahren gemäß einem oder mehreren der Ansprüche 1 bis 4, dadurch gekennzeichnet, daß das Perowskitvorprodukt als Feststoff bei einem pH-Wert im Bereich von 2 bis 5 erhalten wird.

6. Verfahren gemäß einem oder mehreren der Ansprüche 1 bis 4, dadurch gekennzeichnet, daß das Perowskitvorprodukt als Gel durch Aufkonzentrieren der Metallcitrat-Lösung bei einem pH-Wert von größer als 6 erhalten wird.

7. Verfahren gemäß Anspruch 6, dadurch gekennzeichnet, daß das Gel unter Zugabe von organischen Lösungsmitteln kristallisiert wird.

8. Verfahren gemäß Anspruch 7, dadurch gekennzeichnet, daß als organische Lösungsmittel Alkohole und/oder

Ketone eingesetzt werden.

**Claims**

1. A method for the preparation of phase-pure highly reactive lead-metal niobates having a perovskite structure and corresponding to the general formula $Pb_3Me(II)Nb_2O_9$ or $Pb_2Me(III)NbO_6$, wherein Me denotes Mg, Fe, Co, Ni, Cr, Mn, Cd, Cu and/or Zn, whereby perovskite intermediate products are obtained from corresponding salt solutions, optionally separated off, dried and calcined at a temperature within the range of 500 to 1000°C, characterised in that the metal salt solutions used are in the form of citrates and are reacted with ammonia.

2. A method according to claim 1, characterised in that the Nb component is introduced into the metal citrate solution as niobium hydroxide or niobic acid, dissolved in citric acid.

3. A method according to one of claims 1 or 2, characterised in that the calcination is carried out for a period ranging from 30 min to 4 h.

4. A method according to one or more of claims 1 to 3, characterised in that Me is Mg, Ni, Fe and/or Zn.

5. A method according to one or more of claims 1 to 4, characterised in that the perovskite intermediate product is obtained as a solid substance at a pH value within the range of from 2 to 5.

6. A method according to one or more of claims 1 to 4, characterised in that the perovskite intermediate product is obtained as a gel by concentrating the metal citrate solution at a pH value of greater than 6.

7. A method according to claim 6, characterised in that the gel is crystallised by adding organic solvents.

8. A method according to claim 7, characterised in that the organic solvents used are alcohols and/or ketones.

**Revendications**

1. Procédé de préparation de niobates doubles de plomb et d'un autre métal à structure de perovskite, à haute pureté de phase et à haute réactivité, répondant aux formules générales respectives $Pb_3Me(II)Nb_2O_9$ et $Pb_2Me(III)NbO_6$ dans lesquelles Me = Mg, Fe, Co, Ni, Cr, Mn, Cd, Cu et/ou Zn, dans lequel on obtient les produits intermédiaires de la formation des perovskites à partir de solutions de sels correspondants, le cas échéant on les sépare, on les sèche et on les calcine dans l'intervalle de température de 500 à 1000°C, caractérisé en ce que les solutions de sels métalliques sont mises en oeuvre sous forme de citrates et mises à réagir avec de l'ammoniac.

2. Procédé selon revendication 1, caractérisé en ce que l'on introduit le composant du niobium, sous forme d'hydroxyde de niobium ou d'acide niobique, en solution dans l'acide citrique, dans la solution de citrate métallique.

3. Procédé selon l'une des revendications 1 ou 2, caractérisé en ce que la calcination est réalisée en une durée de 30 min à 4 h.

4. Procédé selon une ou plusieurs des revendications 1 à 3, caractérisé en ce que Me = Mg, Ni, Fe et/ou Zn.

5. Procédé selon une ou plusieurs des revendications 1 à 4, caractérisé en ce que le produit intermédiaire de formation de la perovskite est obtenu lui-même à l'état de matière solide à un pH dans l'intervalle de 2 à 5.

6. Procédé selon une ou plusieurs des revendications 1 à 4, caractérisé en ce que le produit intermédiaire de formation de la perovskite est obtenu à l'état de gel par concentration de la solution de citrates métalliques à un pH supérieur à 6.

7. Procédé selon revendication 6, caractérisé en ce que l'on fait cristalliser le gel par addition de solvants organiques.

8. Procédé selon revendication 7, caractérisé en ce que l'on utilise en tant que solvants organiques des alcools et/ou des cétones.